# FASCICULE DE BREVET EUROPEEN

(11) **EP 1 375 046 B1**
(45) Date de publication et mention de la délivrance du brevet: **04.10.2006**
(21) Numéro de dépôt: 03291184.4
(22) Date de dépôt: 20.05.2003
(51) Int. Cl.: B23K 11/31

(54) **Pince à souder portable**
Tragbare Punktschweisszange
Portable spot welding gun

(30) Priorité: 24.05.2002 FR 0206346
(43) Date de publication de la demande: 02.01.2004
(73) Titulaire: Celette S.A., 38200 Vienne (FR)
(72) Inventeur: Celette, Germain, 38206 Vienne (FR)
(74) Mandataire: Jaunez, Xavier

(56) Documents cités:
- DE-A- 3 034 700
- DE-A- 4 319 465
- US-A- 5 099 099

## Description

La présente invention concerne le domaine des pinces à souder, et plus particulièrement des pinces à souder de type portable telles qu'elles sont couramment utilisées dans les ateliers de montage ou de réparation de véhicules automobiles.

### ARRIERE-PLAN DE L'INVENTION

Les pinces à souder portables de conception classique comportent un corps de pince, une paire de mâchoires portant chacune une électrode de soudage, avec une mâchoire fixe qui est rigidement solidaire du corps de pince, et une mâchoire mobile qui est articulée sur ledit corps de pince en pouvant pivoter autour d'un axe transversal afin de rapprocher ou d'éloigner les extrémités actives des deux électrodes de soudage, et un moyen d'actionnement également porté par le corps de pince et agencé pour commander le déplacement de la mâchoire mobile par rapport à la mâchoire fixe en vue de la fermeture ou de l'ouverture de ladite pince à souder.

Les pinces de ce type sont largement répandues, et leur structure est adaptée pour exercer un effort de serrage modéré entre les électrodes, en particulier de l'ordre de 200 à 220 daN. On pourra en particulier se référer à la station de soudage commercialisée par la demanderesse sous la dénomination SCORPION, et qui inclut une telle pince à souder portable. Compte tenu des efforts de serrage demandées, on peut se contenter d'utiliser un vérin pneumatique à double effet, dont le poids reste compatible avec le caractère portable de la pince à souder, en évitant une fatigue excessive de l'opérateur qui manipule ladite pince.

Cependant, lorsqu'il s'agit de souder des tôles dont les épaisseurs sont importantes, il peut s'avérer nécessaire d'avoir besoin de développer des efforts de serrage notablement supérieurs à la gamme de 200 à 220 daN précitée, et en particulier des efforts au moins égaux à 350 daN. Dans ce cas, le vérin pneumatique à double effet n'est plus capable de développer les efforts nécessaires, à moins d'utiliser un vérin de très grandes dimensions qui serait alors incompatible avec le caractère portable de la pince à souder.

Il a certes été récemment proposé une station de soudage comportant une pince à souder portable dont la structure permet de développer des efforts de serrage pouvant aller jusqu'à 350 daN. Cependant, le moyen d'actionnement équipant une telle pince à souder est constitué par un vérin à double étage, c'est-à-dire un système de deux vérins accouplés l'un à l'autre en série. Un tel moyen d'actionnement est cependant de poids important, de sorte que la pince à souder fatigue rapidement l'opérateur qui la manipule. En plus du poids, le volume occupé par le vérin à double étage a pour effet de reculer le centre de gravité, ce qui ajoute encore à la fatigue pour le poignet de l'opérateur.

Il existe donc un besoin d'une pince à souder portable de structure simple et aisément maniable, qui soit capable de développer des efforts de serrage pouvant atteindre 300 à 400 daN.

L'état de la technique est également illustré par le document DE-A-43 19 465.

Ce document décrit une pince à souder montée sur socle (donc non portable), comportant deux mâchoires pivotantes portant chacune une électrode de soudure. Un vérin pneumatique (actionneur) est interposé entre les extrémités des bras, et une tringlerie est également interposée, constituée de trois biellettes dont la biellette centrale est articulée sur le support.

Cependant, cette tringlerie constitue un simple dispositif d'égalisation (du mouvement et de la vitesse des pointes d'électrode l'une vers l'autre). L'action du vérin pneumatique sur les mâchoires est directe, et n'est donc aucunement amplifiée par ladite tringlerie.

On pourra également se référer aux documents DE-A-30 34 700 et US-A-5,099,099.

Le document DE 30 34 700 décrit une pince à souder dont la mâchoire mobile est reliée directement à la tige du vérin d'actionnement. Il est à noter que la fin du mouvement de serrage est un mouvement de translation pure, sans possibilité d'amplification de l'effort de serrage exercé.

Le document US-A-5 099 099 illustre quant à lui une pince à souder dont les mâchoires sont reliées entre elles par un élément ressort, et par une tringlerie qui a pour seule fonction d'éviter des déformations parasites en torsion de l'élément ressort, et par suite un défaut d'alignement des pointes d'électrode. Là encore, l'action du vérin d'actionnement sur la mâchoire mobile est directe, sans possibilité d'amplifier l'effort de serrage exercé.

### OBJET DE L'INVENTION

L'invention a ainsi pour but de concevoir une pince à souder portable capable de développer des efforts de serrage élevés, en particulier atteignant au moins 350 à 400 daN, tout en restant de structure compacte et de poids modéré, en vue d'un maniement aisé et confortable pour l'opérateur.

### DEFINITION GENERALE DE L'INVENTION

Ce problème est résolu conformément à l'invention grâce à une pince à souder portable, comportant un corps de pince, une paire de mâchoires portant chacune une électrode de soudage, avec une mâchoire fixe qui est rigidement solidaire du corps de pince, et une mâchoire mobile qui est articulée sur ledit corps de pince en pouvant pivoter autour d'un axe transversal afin de rapprocher ou d'éloigner les extrémités actives des deux électrodes de soudage, et un moyen d'actionnement également porté par le corps de pince et agencé pour commander le déplacement de la mâchoire mobile par rapport à la mâchoire fixe en vue de la fermeture ou de l'ouverture de ladite pince à souder, Ledit moyen d'actionnement comportant selon l'invention un vérin dont le corps est fixé sur le corps de pince, et dont la tige agit sur la mâchoire mobile par l'intermédiaire d'une tringlerie de démultiplication agencée pour augmenter l'effort de serrage exercé par les deux électrodes lors du processus de soudage.

Ainsi, la tringlerie de démultiplication permet aisément de développer des efforts de serrage élevés, atteignant au moins 350 daN, tout en se contentant d'un moyen d'actionnement de poids et de dimensions qui restent réduits.

De préférence, la tringlerie de démultiplication comporte un levier monté sur le corps de pince pour pouvoir pivoter autour d'un axe parallèle à l'axe transversal de la mâchoire mobile, ledit levier étant relié de façon articulée d'une part à la tige du vérin d'actionnement et d'autre part à un bras rigidement solidaire de la mâchoire mobile.

De préférence alors, les points d'articulation de la tige de vérin et du bras de mâchoire mobile sur le levier pivotant sont disposés de part et d'autre de l'axe de pivotement dudit levier, et lesdits points d'articulation coulissent librement dans des lumières oblongues associées dudit levier.

Avantageusement encore, le levier pivotant est constitué de deux flasques juxtaposés essentiellement rectilignes entre lesquels passe le bras de mâchoire mobile. En particulier, le bras de mâchoire mobile est également constitué de deux flasques juxtaposés.

De préférence, le vérin d'actionnement est un vérin pneumatique à double effet.

Avantageusement alors, la tige du vérin d'actionnement est mobile entre une position d'extension maximale et une position rentrée correspondant respectivement à la fermeture et à l'ouverture maximale de ladite pince à souder. En particulier, la tige du vérin d'actionnement peut occuper une position d'extension intermédiaire correspondant à une ouverture intermédiaire de ladite pince à souder, ledit vérin étant en outre équipé d'un moyen de sollicitation élastique tendant à rappeler ladite tige de la position d'extension maximale vers la position d'extension intermédiaire de celle-ci.

De préférence enfin, le corps de pince est équipé d'une poignée de manoeuvre surplombant le vérin d'actionnement, et présente deux flasques latéraux qui enveloppent la tringlerie de démultiplication.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures où :
- la figure 1 est une vue en élévation illustrant une pince à souder portable conforme à l'invention, en position de fermeture de ses mâchoires ;
- la figure 2 est une vue en perspective de dessous de la pince à souder précitée, permettant de distinguer une partie de la tringlerie de démultiplication équipant ladite pince ;
- les figures 3 et 4 sont des coupes selon les lignes III-III et IV-IV de la figure 1, permettant de mieux appréhender la structure précise des éléments fixes et des éléments mobiles constitutifs de la pince à souder précitée ;
- les figures 5 à 7 sont des vues en coupe par un plan vertical médian, montrant la pince à souder précitée respectivement en position de fermeture, d'ouverture intermédiaire et d'ouverture maximale de ses mâchoires.

### DESCRIPTION DETAILLEE DE L'INVENTION

Les figures illustrent ainsi une pince à souder portable référencée P, qui est agencée conformément à l'invention pour être capable de développer des efforts de serrage élevés au niveau des extrémités actives de ses électrodes, en particulier des efforts atteignant voire dépassant 350 daN tout en étant actionnée par un moyen d'actionnement à la fois compact et léger, participant ainsi grandement au confort et à la facilité de manipulation pour l'opérateur.

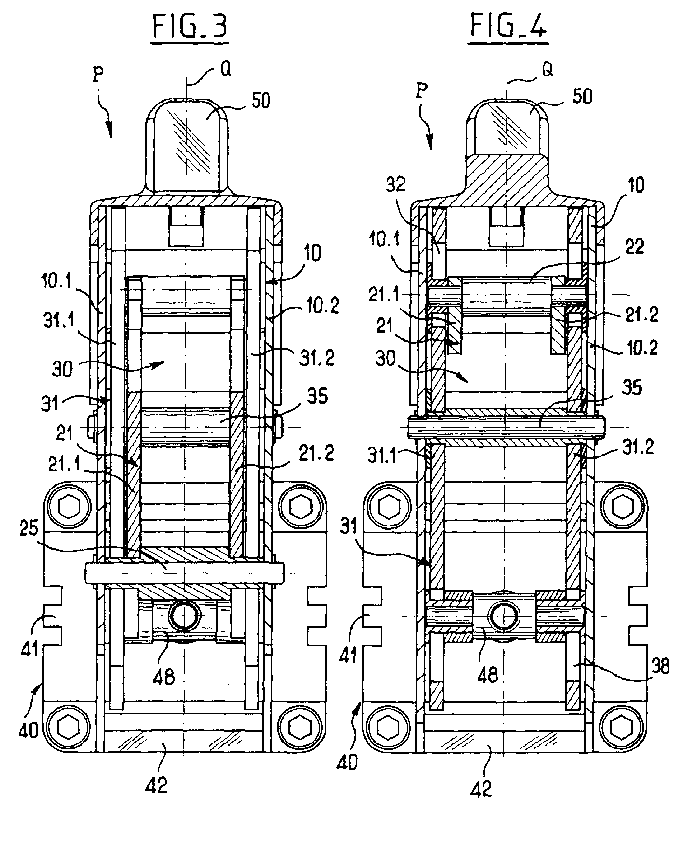

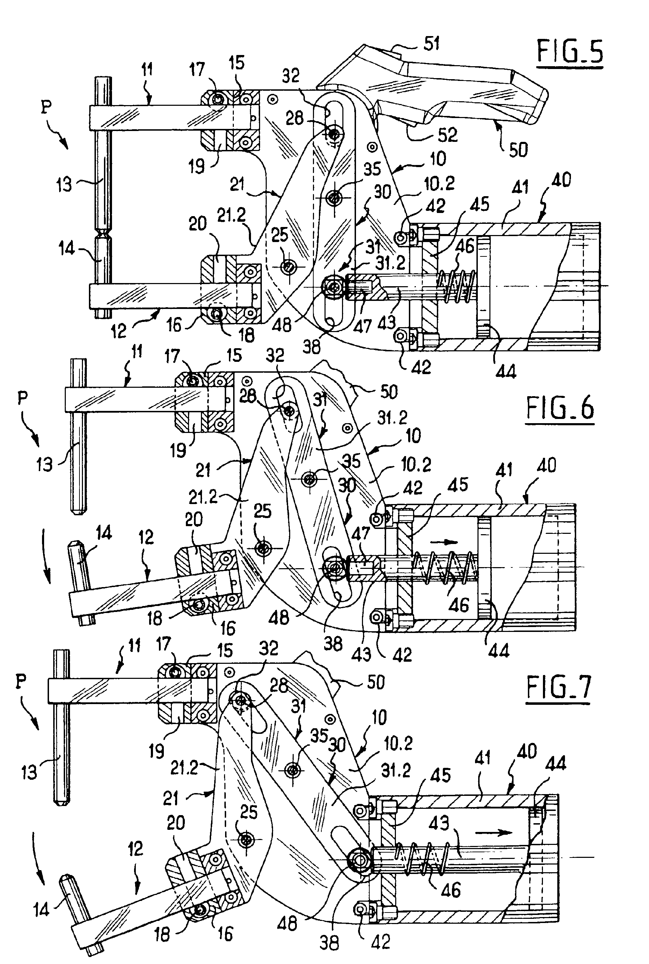

La pince à souder P comporte un corps de pince 10, qui est ici réalisé sous la forme de deux flasques juxtaposés 10.1, 10.2. Chacun de ces flasques est disposé de part et d'autre d'un plan vertical médian (plan Q noté sur les figures 3 et 4), qui est le plan de coupe des figures 5 à 7.

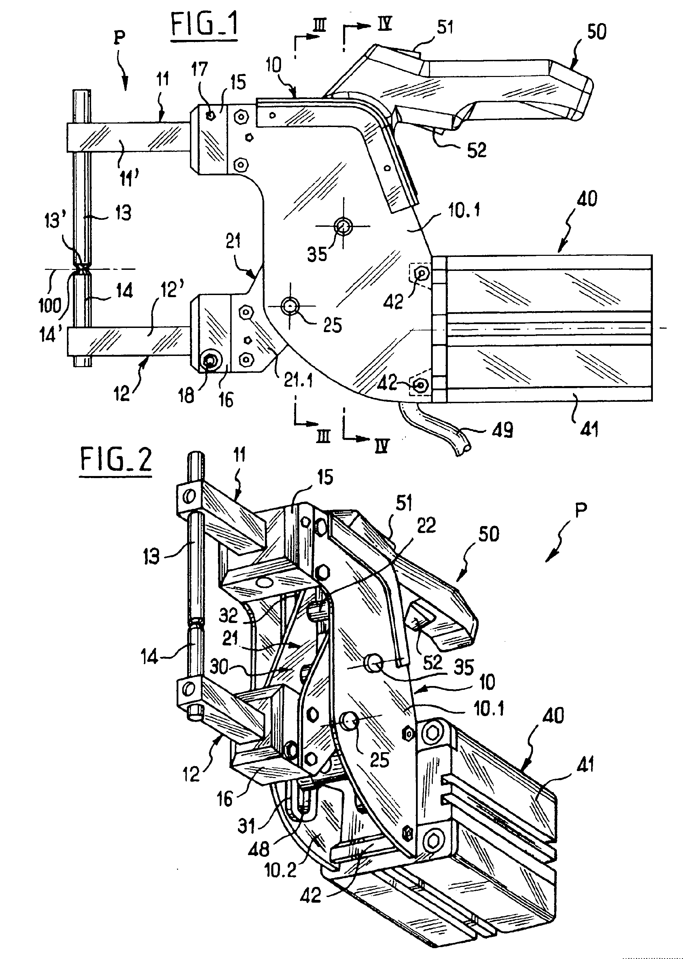

Le corps de pince 10 est équipé d'une paire de mâchoires 11, 12 portant chacune l'électrode de soudage 13, 14. Une de ces deux mâchoires, en l'espèce la mâchoire supérieure 11, est fixe, c'est-à-dire rigidement solidaire du corps de pince 10. L'autre mâchoire, la mâchoire inférieure 12 ici, est mobile, en étant articulée sur le corps de pince 10 pour pouvoir pivoter autour d'un axe transversal 25 afin de rapprocher ou d'éloigner les extrémités actives notées 13', 14' des deux électrodes de soudage 13, 14. En position de fermeture de la pince à souder, les extrémités actives 13', 14' sont proches l'une de l'autre, et pincent entre elles les deux épaisseurs de tôle à souder, comme symbolisé ici sur la figure 1 par un plan en trait mixte 100. Les mâchoires 11, 12, présentent chacune une extension distale 11', 12', qui peut être selon le cas évidée ou de section pleine, et dont les extrémités sont équipées d'électrodes 13, 14 s'étendant dans une direction sensiblement perpendiculaire à la direction des extensions 11', 12'. Les extrémités proximales de ces extensions 11', 12' sont fixées dans des blocs de mâchoires 15, 16 au moyen de boulons associés 17, 18. Les blocs de fixation 15, 16, présentent un canal de passage 19, 20 permettant le branchement des cosses servant à l'amenée du courant électrique dans les électrodes 13, 14.

Il est prévu un moyen d'actionnement également porté par le corps de pince 10, et agencé pour commander le déplacement de la mâchoire mobile 12 par rapport à la mâchoire fixe 11 en vue de la fermeture ou de l'ouverture de la pince à souder.

Conformément à une caractéristique essentielle de l'invention, le moyen d'actionnement précité comporte un vérin 40 dont le corps 41 est fixé sur le corps de pince 10, et dont la tige 43 agit sur la mâchoire mobile 12 par l'intermédiaire d'une tringlerie de démultiplication 30 agencée pour augmenter l'effort de serrage exercé par les deux électrodes 13, 14 lors du processus de soudage.

Le vérin d'actionnement 40 est de préférence un vérin pneumatique à double effet. Les canalisations d'air associées à la commande du déplacement de la tige 43 du vérin pneumatique sont ici schématiquement regroupées avec le conducteur assurant l'amenée du courant électrique aux deux électrodes, sous forme d'une gaîne unique 49. Le corps de vérin 41 est fixé au corps de pince 10, c'est-à-dire en l'espèce aux deux flasques 10.1, 10.2 constituant ledit corps de pince, par des blocs frontaux 42 sur lesquels sont vissés les deux flasques précités.

Le corps de pince 10 est également équipé d'une poignée de manoeuvre 50 surplombant le vérin d'actionnement 40. La poignée de manoeuvre 50 permet une prise aisée et confortable de la pince à souder, grâce au poids et au dimensionnement réduits du moyen d'actionnement, et en particulier du vérin pneumatique à double effet qui est analogue à celui couramment utilisé pour les pinces à souder de type classique conçues pour développer des efforts de serrage nettement plus faibles. La poignée 50 comporte ici deux poussoirs de commande 51, 52 sur lesquels il sera revenu plus loin.

La tringlerie de démultiplication 30 comporte un levier 31 monté sur le corps de pince 10 pour pouvoir pivoter autour d'un axe 35 qui est parallèle à l'axe transversal 25 de la mâchoire mobile 12. Le levier 31 est relié de façon articulée d'une part à la tige 43 du vérin d'actionnement 40, et d'autre part à un bras 21 qui est rigidement solidaire de la mâchoire mobile 12.

Le bras de mâchoire mobile 21 est ici constitué de deux flasques juxtaposés 21.1, 21.2 s'étendant parallèlement au plan vertical médian Q de la pince. Les extrémités inférieures des deux flasques constitutifs du bras 21 sont fixées sur le bloc de mâchoire inférieure 16, tandis que les extrémités supérieures sont réunies par un système de galet 22. La structure de la mâchoire inférieure 12 est ici pleine, donc mécaniquement très résistante, et assure un pivotement fiable et précis dans son plan. Le galet supérieur 22 du bras 21 de la mâchoire mobile 12 passe dans une lumière allongée 32 ménagée en partie supérieure du levier pivotant 31. L'extrémité opposée de ce levier pivotant 31 présente de la même façon une lumière allongée 38 dans laquelle passe un système de galet 48 monté en extrémité distale d'un embout 47 monté sur la tige 42 du vérin d'actionnement 40. Les points d'articulation 48 ; 22 de la tige de vérin 43 et du bras de mâchoire mobile 21 sur le levier pivotant 31 sont ainsi disposés de part et d'autre de l'axe de pivotement 35 dudit levier, et ces points d'articulation coulissent librement dans les lumières oblongues associées 38, 32 dudit levier.

Le levier pivotant 31 est en l'espèce constitué de deux flasques juxtaposés 31.1, 31.2 et sont ici essentiellement rectilignes. Entre ces deux flasques de mâchoire mobile 21, c'est-à-dire plus précisément les deux flasques 21.1, 21.2 constitutifs dudit bras. Cet ensemble mobile, constituant la tringlerie de démultiplication 30, est essentiellement logé dans le corps de pince 10, c'est-à-dire entre les deux flasques constitutifs dudit corps 10.1, 10.2.

De façon classique, la tige 43 du vérin d'actionnement 40 est mobile entre une position d'extension maximale et une position rentrée correspondant respectivement à la fermeture et à l'ouverture maximale de la pince à souder. On a cependant ici prévu que la tige 43 du vérin d'actionnement 40 peut occuper une position d'extension intermédiaire correspondant à une ouverture intermédiaire de ladite pince à souder.

Les figures 5 à 7 illustrent ainsi la position des composants de la pince à souder respectivement en position de fermeture, d'ouverture intermédiaire, et d'ouverture maximale de la pince à souder précitée. Si l'on se réfère à la structure du vérin d'actionnement pneumatique 40, on constate que le piston mobile 44 occupe alors trois positions différentes associées aux positions d'extension maximale, d'extension intermédiaire, et de rentrée respectivement pour la tige mobile 43.

Il est à noter que le vérin pneumatique 40 est en outre équipé d'un moyen de sollicitation élastique, ici agencé sous la forme d'un ressort hélicoïdal 46 entourant la tige 43 dudit vérin. Ce ressort peut ainsi être comprimé entre le piston mobile 44 et la paroi distale 45 du corps de vérin 41.

Dans la pratique, la position de repos de la pince à souder sera la position correspondant à l'ouverture intermédiaire de ladite pince (position de la figure 6). Pour le processus de soudage, l'opérateur approche les électrodes des faces concernées des tôles à souder, puis actionne le poussoir 52 prévu en gâchette sur la poignée de manoeuvre 50. Le cycle programmé peut alors intervenir, avec ses étapes d'accostage, de soudure et de relâchement. Le ressort 46 permet alors un rappel assisté rapide en position d'ouverture intermédiaire, après l'opération de soudage proprement dite. Le cycle de soudage peut ainsi rester dans une durée faible et constante prédéterminée. Si l'opérateur souhaite disposer de la position d'ouverture maximale illustrée en figure 7, il lui suffit alors d'actionner un autre poussoir 51 agencé sur la face supérieure de la poignée de manoeuvre 50, et qui provoque la rentrée maximale de la tige de piston 43. A titre indicatif, la distance séparant les extrémités actives 13', 14' des électrodes 13, 14 sera de l'ordre de 2 cm en position d'ouverture intermédiaire (figure 6), et de 5 cm en position d'ouverture maximale (figure 7).

On est ainsi parvenu à réaliser une pince à souder portable de structure simple et de conception légère, capable de développer des efforts de serrage élevés, atteignant, voire dépassant, les valeurs de 350 daN.

On notera que la mâchoire mobile est ici la mâchoire inférieure de la pince. On aurait pu naturellement prévoir un agencement symétrique, mais la disposition présentement illustrée paraît préférable pour soulager l'opérateur maniant la pince à souder.

La structure du corps de pince 10, du bras 21 de mâchoire inférieure mobile, et du levier pivotant 30, sous forme de flasques juxtaposés permet à la fois d'obtenir la légèreté désirée et une résistance mécanique élevée.

On pourra également prévoir un mécanisme de démontage rapide des électrodes (non représenté ici), afin de pouvoir substituer sur place un jeu d'électrodes à un autre jeu en fonction du type de travail à réaliser. A ce titre, on pourra utiliser des électrodes de types différents, qui sont soit de section pleine comme illustré ici, soit creuse pour aménager une circulation de fluide de refroidissement, tel que de l'eau, passant à l'intérieur des électrodes.

On observera enfin que la disposition présentement décrite pour la tringlerie de démultiplication permet d'avoir une compacité optimale dans la mesure où le levier pivotant de cette tringlerie reste confiné dans l'espace intérieur du corps de pince dans toutes ses positions angulaires.

L'invention n'est pas limitée aux modes de réalisation qui viennent d'être décrit, mais englobe au contraire toute variante reprenant, avec des moyens équivalents, les caractéristiques essentielles mentionées dans les revendications.

## Revendications

1. Pince à souder portable (P), comportant un corps de pince (10), une paire de mâchoires (11 ; 12) portant chacune une électrode de soudage (13 ; 14), avec une mâchoire fixe (11) qui est rigidement solidaire du corps de pince (10), et une mâchoire mobile (12) qui est articulée sur ledit corps de pince en pouvant pivoter autour d'un axe transversal (25) afin de rapprocher ou d'éloigner les extrémités actives (13', 14') des deux électrodes de soudage (13, 14), et un moyen d'actionnement (30, 40) également porté par le corps de pince (10) et agencé pour commander le déplacement de la mâchoire mobile (12) par rapport à la mâchoire fixe (11) en vue de la fermeture ou de l'ouverture de ladite pince à souder, **caractérisée en ce que** le moyen d'actionnement (30, 40) comporte un vérin (40) dont le corps (41) est fixé sur le corps de pince (10), et dont la tige (43) agit sur la mâchoire mobile (12) par l'intermédiaire d'une tringlerie de démultiplication (30) agencée pour augmenter l'effort de serrage exercé par les deux électrodes (13, 14) lors du processus de soudage.

2. Pince à souder selon la revendication 1, **caractérisée en ce que** la tringlerie de démultiplication (30) comporte un levier (31) monté sur le corps de pince (10) pour pouvoir pivoter autour d'un axe (35) parallèle à l'axe transversal (25) de la mâchoire mobile (12), ledit levier étant relié de façon articulée d'une part à la tige (43) du vérin d'actionnement (40) et d'autre part à un bras (21) rigidement solidaire de la mâchoire mobile (12) .

3. Pince à souder selon la revendication 2, **caractérisée en ce que** les points d'articulation (48 ; 22) de la tige de vérin (43) et du bras de mâchoire mobile (21) sur le levier pivotant (31) sont disposés de part et d'autre de l'axe de pivotement (35) dudit levier.

4. Pince à souder selon la revendication 2 ou la revendication 3, **caractérisée en ce que** les points d'articulation (48 ; 22) de la tige de vérin (43) et du bras de mâchoire mobile (21) sur le levier pivotant (31) coulissent librement dans des lumières oblongues associées (38 ; 32) dudit levier.

5. Pince à souder selon l'une quelconque des revendications 2 à 4, **caractérisée en ce que** le levier pivotant (31) est constitué de deux flasques juxtaposés (31.1, 31.2) essentiellement rectilignes entre lesquels passe le bras de mâchoire mobile (21).

6. Pince à souder selon la revendication 5, **caractérisée en ce que** le bras de mâchoire mobile (21) est également constitué de deux flasques juxtaposés (21.1, 21.2).

7. Pince à souder selon l'une quelconque des revendications 1 à 6, **caractérisée en ce que** le vérin d'actionnement (40) est un vérin pneumatique à double effet.

8. Pince à souder selon la revendication 7, **caractérisée en ce que** la tige (43) du vérin d'actionnement (40) est mobile entre une position d'extension maximale et une position rentrée correspondant respectivement à la fermeture et à l'ouverture maximale de ladite pince à souder.

9. Pince à souder selon la revendication 8, **caractérisée en ce que** la tige (43) du vérin d'actionnement (40) peut occuper une position d'extension intermédiaire correspondant à une ouverture intermédiaire de ladite pince à souder, ledit vérin étant en outre équipé d'un moyen de sollicitation élastique (46) tendant à rappeler ladite tige de la position d'extension maximale vers la position d'extension intermédiaire de celle-ci.

10. Pince à souder selon l'une quelconque des revendications 1 à 9, **caractérisée en ce que** le corps de pince (10) est équipé d'une poignée de manoeuvre (50) surplombant le vérin d'actionnement (40), et présente deux flasques latéraux (10.1, 10.2) qui enveloppent la tringlerie de démultiplication (30).

## Claims

1. A portable welding gun (P) comprising a gun body (10), a pair of jaws (11; 12) each carrying a welding electrode (13; 14), and comprising a stationary jaw (11) which is rigidly secured to the gun body (10) and a moving jaw (12) which is hinged to said gun body to pivot about a transverse axis (25) in order to move the active ends (13', 14') of the two welding electrodes (13, 14) towards each other or away from each other, and actuator means (30, 40) also carried by the gun body (10) and arranged to control the movement of the moving jaw (12) relative to the stationary jaw (11) in order to close or open said welding gun, the welding gun being **characterized in that** the actuator means (30, 40) comprise an actuator (40) having a cylinder (41) secured to the gun body (10) and having a rod (43) acting on the moving jaw (12) via a displacement-reducing linkage (30) arranged to increase the clamping force exerted by the two electrodes (13, 14) during the welding process.

2. A welding gun according to claim 1, **characterized in that** the displacement-reducing linkage (30) comprises a lever (31) mounted on the gun body (10) to be capable of pivoting about an axis (35) parallel to the transverse axis (25) of the moving jaw (12), said lever being hinged firstly to the rod (43) of the actuator (40) and secondly to an arm (21) rigidly secured to the moving jaw (12).

3. A welding gun according to claim 2, **characterized in that** the hinge points (48; 22) of the actuator rod (43) and of the moving jaw arm (21) on the pivot lever (31) are disposed on opposite sides of the pivot axis (35) of said lever.

4. A welding gun according to claim 2 or claim 3, **characterized in that** the hinge points (48; 22) of the actuator rod (43) and of the moving jaw arm (21) on the pivot lever (31) slide freely in associated oblong slots (38; 32) of said lever.

5. A welding gun according to any one of claims 2 to 4, **characterized in that** the pivot lever (31) is constituted by two juxtaposed plates (31.1, 31.2) that are essentially rectilinear and between which the moving jaw arm (21) passes.

6. A welding gun according to claim 5, **characterized in that** the moving jaw arm (21) is also constituted by two juxtaposed plates (21.1, 21.2).

7. A welding gun according to any one of claims 1 to 6, **characterized in that** the actuator (40) is a double-acting pneumatic actuator.

8. A welding gun according to claim 7, **characterized in that** the rod (43) of the actuator (40) is movable between a maximally extended position and a retracted position corresponding respectively to said welding gun being closed and being maximally open.

9. A welding gun according to claim 8, **characterized in that** the rod (43) of the actuator (40) can occupy a position of intermediate extension corresponding to intermediate opening of said welding gun, said actuator also being fitted with resilient means (46) tending to urge said rod from its position of maximum extension towards its position of intermediate extension.

10. A welding gun according to any one of claims 1 to 9, **characterized in that** the gun body (10) is fitted with an operating handle (50) overlying the actuator (40) and presenting two side plates (10.1, 10.2) on either side of the displacement-reducing linkage (30).

## Patentansprüche

1. Tragbare Schweißzange (P), umfassend ein Zangengehäuse (10), ein Paar Spannbacken (11; 12), die jeweils eine Schweißelektrode (13; 14) tragen, darunter eine ortsfeste Spannbacke (11), die starr mit dem Zangengehäuse (10) verbunden ist, und eine bewegliche Spannbacke (12), die an dem genannten Zangengehäuse (10) angelenkt ist, indem sie sich um eine Querachse (25) drehen kann, um die aktiven Enden (13', 14') der beiden Schweißelektroden (13, 14) einander anzunähern bzw. voneinander zu entfernen, sowie Betätigungsmittel (30, 40), die ebenfalls von dem Zangengehäuse (10) getragen werden und derart angeordnet sind, dass sie die Bewegung der beweglichen Spannbacke (12) relativ zur ortsfesten Spannbacke (11) zum Schließen bzw. Öffnen der genannten Schweißzange steuern, **dadurch gekennzeichnet, dass** die Betätigungsmittel (30, 40) einen Arbeitszylinder (40) umfassen, dessen Gehäuse (41) an dem Zangengehäuse (10) befestigt ist und dessen Stange (43) auf die bewegliche Spannbacke (12) mittels eines Untersetzungsgestänges (30) einwirkt, das derart angeordnet ist, dass es die durch die beiden Elektroden (13, 14) während des Schweißvorgangs ausgeübte Spannkraft erhöht.

2. Schweißzange nach Anspruch 1, **dadurch gekennzeichnet, dass** das Untersetzungsgestänge (30) einen Hebel (31) umfasst, der an dem Zangengehäuse (10) derart angebracht ist, dass er sich um eine Achse (35) drehen kann, die parallel zur Querachse (25) der beweglichen Spannbacke (12) ist, wobei der Hebel auf angelenkte Weise einerseits mit der Stange (43) des Betätigungszylinders (40) und andererseits mit einem Arm (21) verbunden ist, der starr mit der beweglichen Spannbacke (12) verbunden ist.

3. Schweißzange nach Anspruch 2, **dadurch gekennzeichnet, dass** die Gelenkverbindungspunkte (48; 22) der Zylinderstange (43) und des Arms (21) der beweglichen Spannbacke an dem Schwenkhebel (31) auf beiden Seiten der Schwenkachse (35) des Hebels angeordnet sind.

4. Schweißzange nach Anspruch 2 oder Anspruch 3, **dadurch gekennzeichnet, dass** die Gelenkverbindungspunkte (48; 22) der Zylinderstange (43) und des Arms (21) der beweglichen Spannbacke an dem Schwenkhebel (31) frei in dazugehörigen Schlitzlöchern (38; 32) des Hebels verschiebbar sind.

5. Schweißzange nach einem der Ansprüche 2 bis 4, **dadurch gekennzeichnet, dass** der Schwenkhebel (31) aus zwei im wesentlichen geradlinigen, nebeneinander angeordneten Wangen (31.1, 31.2) gebildet ist, zwischen denen der Arm (21) der beweglichen Spannbacke (21) hindurchgeht.

6. Schweißzange nach Anspruch 5, **dadurch gekennzeichnet, dass** der Arm (21) der beweglichen Spannbacke ebenfalls aus zwei nebeneinander angeordneten Wangen (21.1, 21.2) gebildet ist.

7. Schweißzange nach einem der Ansprüche 1 bis 6, **dadurch gekennzeichnet, dass** der Betätigungszylinder (40) ein pneumatischer Zylinder mit Doppelwirkung ist.

8. Schweißzange nach Anspruch 7, **dadurch gekennzeichnet, dass** die Stange (43) des Betätigungszylinders (40) zwischen einer maximalen Ausfahrposition und einer Rückzugsposition beweglich ist, die dem Schließen bzw. dem maximalen Öffnen der Schweißzange entsprechen.

9. Schweißzange nach Anspruch 8, **dadurch gekennzeichnet, dass** die Stange (43) des Betätigungszylinders (40) eine mittlere Ausfahrposition einnehmen kann, die einer mittleren Öffnung der Schweißzange entspricht, wobei der Zylinder ferner mit elastischen Vorspannmitteln (46) versehen ist, die darauf abzielen, die genannte Stange von der maximalen Ausfahrposition in deren mittlere Ausfahrposition zu bringen.

10. Schweißzange nach einem der Ansprüche 1 bis 9, **dadurch gekennzeichnet, dass** das Zangengehäuse (10) mit einem Stellgriff (50) versehen ist, der über dem Betätigungszylinder (40) angeordnet ist, und zwei seitliche Wangen (10.1, 10.2) aufweist, die das Untersetzungsgestänge (30) umgeben.
